# EUROPÄISCHE PATENTSCHRIFT

(11) **EP 1 390 693 B1**
(45) Veröffentlichungstag und Bekanntmachung des Hinweises auf die Patenterteilung: **08.09.2010**
(21) Anmeldenummer: 02729892.6
(22) Anmeldetag: 15.05.2002
(51) Int. Cl.: G01B 11/02, G01B 11/06, G02B 21/00

(54) **SENSORVORRICHTUNG ZUR SCHNELLEN OPTISCHEN ABSTANDSMESSUNG NACH DEM KONFOKALEN OPTISCHEN ABBILDUNGSPRINZIP**
SENSOR DEVICE FOR PERFORMING RAPID OPTICAL MEASUREMENT OF DISTANCES ACCORDING TO THE CONFOCAL OPTICAL IMAGING PRINCIPLE
DISPOSITIF DE DETECTION POUR LA MESURE OPTIQUE RAPIDE D'ESPACEMENTS SELON LE PRINCIPE D'IMAGERIE OPTIQUE CONFOCALE

(30) Priorität: 28.05.2001 DE 10125885
(43) Veröffentlichungstag der Anmeldung: 25.02.2004
(73) Patentinhaber: NanoFocus AG, 46149 Oberhausen (DE)
(72) Erfinder: SCHICK, Anton, 84149 Velden (DE)
(74) Vertreter: Röther, Peter
(86) Internationale Anmeldenummer: PCT/DE2002/001748
(87) Internationale Veröffentlichungsnummer: WO 2002/097364

(56) Entgegenhaltungen:
- WO-A-90/00754
- US-A- 5 543 918

## Beschreibung

Die Erfindung betrifft eine Sensorvorrichtung zur schnellen optischen Abstandsmessung und zur Ermittlung von Abstands-und/oder Höhenwerten einer Oberfläche, insbesondere zur dreidimensionalen Oberflächenvermessung.

Für Montagesysteme im Bereich der Elektronikfertigung, wie z.B. für Bestückautomaten für Leiterplatten, werden die Anforderungen an die Lagetoleranzen der Bauelemente aufgrund der zunehmenden Miniaturisierung von Bauelementen immer größer. Die Anforderung an die Bestückgeschwindigkeit ist in den letzten Jahren ebenfalls stark gestiegen und wird wohl auch in Zukunft weiter ansteigen. Diese hohen Anforderungen haben zur Folge, dass Montagesysteme zukünftig neben hochgenauen und schnellen Lagesensoren für Bauelemente auch hochgenaue und schnelle Abstands- oder Höhensensoren benötigen. Solche Sensoren sind z.B. für eine Prüfung der Koplanarität der Anschlussstifte von Bauelementen erforderlich. Eine weitere Anwendung für Abstands- oder Höhensensoren stellt die Abstandskontrolle zwischen einem Bauteil und dem Schaltungsträger während des Aufsetzvorganges dar.

Bisher bekannte Einrichtungen zur Aufnahme von Höhenrasterbildern, die aus einer Vielzahl von dreidimensional vorliegenden Punkten von Objektoberflächen bestehen, beruhen im wesentlichen auf dem sog. Triangulationsverfahren. Dabei tastet ein Laserstrahl die Oberfläche des zu untersuchenden Objektes ab. Während die beiden ebenen Ortskoordinaten eines bestimmten Oberflächenpunktes durch die aktuelle Positionierung des Laserstrahls bekannt sind, wird die Höhenkoordinate des aktuell zu vermessenden Oberflächenpunktes von mindestens einem seitlich angeordneten Objektiv in Verbindung mit einem ortsensitiven Detektor erfasst. Durch sequentielles Ausleuchten der zu untersuchenden dreidimensionalen Oberfläche mittels des Laserstrahls lässt sich somit die zu untersuchende Oberfläche vermessen.

Das Auflösungsvermögen von optischen Abstandssensoren, welche das Triangulationsverfahren verwenden, hängt vom sog. Triangulationswinkel ab. Da mit einer zukünftigen Verkleinerung von Bauelementen auch das Auflösungsvermögen der Abstandssensoren verbessert werden muss, muss bei derartigen optischen Abstandssensoren der Triangulationswinkel vergrößert werden, was jedoch zu einer erheblichen Vergrößerung von bereits bestehenden Abschattungsproblemen führt. Ein weiterer Nachteil von auf dem Triangulationsverfahren beruhenden optischen Abstandssensoren besteht darin, dass die zu untersuchenden Oberflächen i. a. unterschiedliche optische Streuvermögen aufweisen. Präzise Abstandsmessungen sind i. a. nur bei Objekten möglich, deren Oberfläche ein isotropes, d.h. in alle Richtungen gleich stark ausgeprägtes Streuvermögen des auf die Oberfläche auftreffenden Laserstrahls aufweist. Ein solches isotropes Streuvermögen ist insbesondere bei metallisch spiegelnden oder auch transparenten Oberflächen in der Regel nicht gewährleistet.

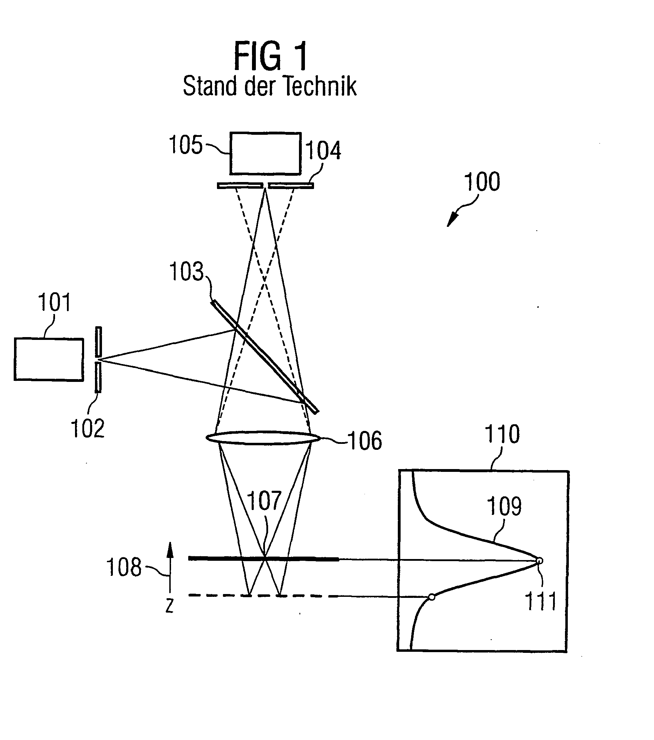

Ein für die dreidimensionale Vermessung von Oberflächenstrukturen bekanntes Verfahren basiert auf dem sog. konfokalen Prinzip. Hierbei wird eine punktförmige Lichtquelle, welche gewöhnlich durch eine Lochblende definiert wird, auf die Oberfläche des zu erfassenden Objekts abgebildet. Das von der Oberfläche zurückgestreute Licht wird wiederum auf einen nahezu punktförmigen Detektor abgebildet, welcher ebenfalls üblicherweise durch eine Lochblende definiert wird. Die auf den Detektor auftreffende Lichtintensität ist genau dann maximal, wenn sowohl die Objekt- als auch die Detektorebene tatsächlich im Brennpunkt der jeweiligen Optik liegen. Befindet sich die zu untersuchende Objektoberfläche außerhalb der Brennebene, so erfolgt eine Aufweitung des Messstrahls vor dem punktförmigen Detektor und die messbare Intensität nimmt stark ab. Im folgenden werden anhand von Figur 1 eine bekannte Sensorvorrichtung zur optischen Abstandsmessung nach dem konfokalen Prinzip erläutert. Die Sensorvorrichtung 100 weist eine Lichtquelle 101, eine erste Lochblende 102, einen Strahlteiler 103, eine zweite Lochblende 104, einen Lichtdetektor 105 und ein Objektiv 106 auf. Die erste Lichtblende 102 ist unmittelbar vor der Lichtquelle 101 angeordnet, so dass das System aus Lichtquelle 101 und erster Lochblende 102 wie eine Punktlichtquelle wirkt, welche eine effektive lichtemittierende Fläche aufweist, die dem Querschnitt der Öffnung der ersten Lochblende 102 entspricht. Entsprechend ist die zweite Lochblende 104 unmittelbar vor dem Lichtdetektor 105 angeordnet. Der Lichtdetektor 105, die zweite Lochblende 104, der Strahlteiler 103, das Objektiv 106 und der aktuell zu vermessende Punkt der zu erfassenden Oberfläche (nicht dargestellt) liegen auf einer Achse, welche mit der optischen Achse des Objektivs 106 zusammenfällt.

Im folgenden wird der Strahlengang in der Sensorvorrichtung 100 erläutert. Das von der Punktlichtquelle emittierte Licht trifft zunächst auf den Strahlteiler 103. Dieser ist relativ zu der optischen Achse schräg gestellt, so dass das von der Punktlichtquelle emittierte Licht nach Reflexion an dem Strahlteiler 103 auf das Objektiv 106 gerichtet und von diesem auf einen Brennpunkt 107 fokussiert wird, welcher sich zumindest in der Nähe der zu vermessenden Oberfläche befindet. Das von der Oberfläche zumindest teilweise zurückreflektierte Licht wird wiederum mittels des Objektivs 106 auf die zweite Lochblende 104 abgebildet. Zu dieser Abbildung trägt nur das Licht bei, welches ohne weitere Ablenkung durch den Strahlteiler 103 transmittiert wird. Die beiden Blenden 102 und 104 sind relativ zu der Brennebene des Objektivs 106 konfokal angeordnet, d.h. der Abstand zwischen der zweiten Lochblende 104 und dem Objektiv 106 ist gleich der Summe der Abstände zwischen erster Lochblende 102 und Strahlteiler 103 und zwischen Strahlteiler 103 und Objektiv 106. Für die optischen Abbildungen innerhalb der Sensorvorrichtung 100 bedeutet dies, dass die Lochblende 102 über Reflexion an dem Strahlteiler 103 von dem Objektiv 106 auf den Brennpunkt 107 abgebildet wird, und dass der Brennpunkt 107 mittels dem Objektiv 106 auf die zweite Lochblende 104 abgebildet wird.

Die eigentliche Abstandsmessung erfolgt dadurch, dass die gesamte Sensorvorrichtung 100 relativ zu der nicht dargestellten zu vermessenden Oberfläche in z-Richtung 108 bewegt wird. Im Verlauf dieser Bewegung wird die von dem Lichtdetektor 105 gemessene Lichtintensität erfasst. Der Verlauf 109 der gemessenen Lichtintensität als Funktion des Abstandes zwischen der Sensorvorrichtung 100 und der zu vermessenden Oberfläche ist in dem Einschub 110 skizziert. Es zeigt sich genau dann ein Maximum 111, wenn der Brennpunkt 107 unmittelbar auf der zu vermessenden Oberfläche liegt. Anders ausgedrückt erhält man das Maximum 111, wenn die Öffnung der ersten Lochblende 102 auf eine möglichst kleine Fläche auf der zu vermessenden Oberfläche abgebildet wird. Bei der konfokalen Anordnung der beiden Lochblenden 102 und 104 bedeutet dies, dass die beleuchtete Fläche auf der zu vermessenden Oberfläche (nicht dargestellt) mittels des Objektivs 106 auf eine möglichst kleine Fläche abgebildet wird, die mit der Öffnung der zweiten Lochblende 104 zusammenfällt. Aus dem Verlauf 109 der Lichtintensität, insbesondere aus der genauen Lage des Maximums 111, kann der Abstand von dem entsprechenden Punkt der zu vermessenden Oberfläche zu der Sensorvorrichtung 100 ermittelt werden. Ein gesamtes dreidimensionales Oberflächenprofil einer unbekannten Struktur wird dann durch sequentielle Abstandsmessungen zwischen der Sensorvorrichtung 100 und einzelnen Punkten auf der zu vermessenden Oberfläche ermittelt.

Gemäß dem konfokalen Prinzip sind Beleuchtungs- und Detektionspfad identisch, d.h. das auf die zu erfassende Oberfläche auftreffende und das von der zu erfassenden Oberfläche reflektierte Licht verlaufen koaxial und Abschattungsphänomene sind im allgemeinen zu vernachlässigen. Ferner erfordert die Abstandsmessung mittels der Sensorvorrichtung 100 nicht die Erfassung des Absolutwertes der zurückreflektierten Lichtintensität sondern es genügt die relative Lichtintensität, welche von dem punktförmigen Lichtdetektor in Abhängigkeit von der Verschiebung der Sensorvorrichtung 100 in z-Richtung 108 gemessen wird. Damit ist eine Abstandmessung mittels der Sensorvorrichtung 100 nahezu unabhängig von den Streu- oder Reflexionseigenschaften der zu erfassenden Objektoberfläche. Die Verwendung eines punktförmigen Lichtdetektors bewirkt außerdem, dass Mehrfachreflexionen auf dreidimensionalen Objektoberflächen nicht zu Falschmessungen führen. Ein weiterer wichtiger Vorteil des konfokalen Verfahrens besteht in der hohen Messgenauigkeit bis in Submikrometerbereich, so dass die mit der zunehmenden Miniaturisierung von Bauelementen verbundenen Genauigkeitsanforderungen auf einfache Weise erreicht werden.

Ein Nachteil der in Figur 1 dargestellten Sensorvorrichtung 100 besteht darin, dass zur Abstandsmessung die gesamte Sensorvorrichtung 100 relativ zu der zu vermessenden Oberfläche bewegt werden muss. Ein weiterer Nachteil besteht darin, dass mehrere optische Komponenten verwendet werden müssen und es somit bisher nicht möglich geworden ist kompakte konfokale Sensoren mit geringen Abmessungen kostengünstig herzustellen.

Aus der WO 93/11403 ist ein auf dem konfokalen Prinzip basierender optischer Abstandssensor bekannt, welcher sich durch folgende Merkmale auszeichnet: 1) Der Messstrahl ist bezüglich des Durchmessers wesentlich größer ausgeformt als der Beleuchtungsstrahl, 2) die Durchmesser von Mess- und Beleuchtungsstrahl sind am Messort annähernd gleich, wobei der Beleuchtungsstrahl eine größere Fokustiefe aufweist als der Messstrahl, und 3) eine Strahlteilungseinheit mit einer Mehrzahl von Strahlteilern spaltet den Messstrahl in eine Mehrzahl von Teilstrahlen auf, wobei in jedem Teilstrahl ein annähernd punktförmiger Photodetektor angeordnet ist.

Aus der DE 19608468 ist ein weiterer auf dem konfokalen Prinzip basierender optischer Abstandssensor bekannt, mit 1) einer Sendeeinheit mit mehreren punktförmigen Lichtquellen, die auf die Oberfläche eines Messobjekts abgebildet werden, 2) einer Empfangseinheit mit mehreren korrespondierenden punktförmigen Lichtdetektoren gleicher Anzahl, die konfokal im bildseitigen Messbereich angeordnet sind, wobei die punktförmigen Lichtquellen und die korrespondierenden punktförmigen Lichtdetektoren jeweils zeilenförmig in einer zur optischen Achse orthogonalen Ebene angeordnet sind und auf der Oberfläche eine geradlinige Reihe von Abtastpunkten erzeugen, 3) einer koaxialen Führung von Beleuchtungs- und Messstrahl, und 4) einer periodisch variierbaren optischen Wegstrecke zwischen Empfangseinheit und Abbildungsoptik.

Der Erfindung liegt die Aufgabe zugrunde, einen kompakten, hoch auflösenden Abstandssensor zur Verfügung zu stellen, welcher sich durch eine hohe Datenrate und durch eine geringe Empfindlichkeit sowohl in bezug auf das Streuvermögen der zu vermessenden Oberfläche als auch in bezug auf Sekundärlichtreflexe auszeichnet.

Diese Aufgabe wird gelöst durch eine Sensorvorrichtung zur schnellen optischen Abstandsmessung nach dem konfokalen Abbildungsprinzip zur Ermittlung von Abstands- und/oder Höhenwerten einer Oberfläche, insbesondere zur dreidimensionalen Oberflächenvermessung, mit einem auf einer optischen Achse angeordneten punktförmigen lichtaussendenden Element, einem senkrecht zu der optischen Achse angeordneten Reflektor, welcher entlang der optischen Achse bewegbar ist, einer zentriert zu der optischen Achse angeordneten Abbildungsoptik und einem punktförmigen lichtempfangenden Element, welches an der selben Stelle wie das lichtaussendende Element angeordnet ist, wobei von dem lichtaussendenden Element ausgesandtes Licht von dem Reflektor reflektiert wird, im Verlauf der Bewegung des Reflektors das von dem Reflektor reflektierte Licht von der Abbildungsoptik zumindest einmal auf die zu vermessende Oberfläche fokussiert wird, das fokussierte Licht von der zu vermessenden Oberfläche zumindest teilweise zurückgestreut wird und im Verlauf der Bewegung des Reflektors das zurückgestreute Licht von der Abbildungsoptik über den Reflektor zumindest einmal auf das lichtempfangende Element fokussiert wird. Die erfindungsgemäße Sensorvorrichtung zeichnet sich gegenüber herkömmlichen Sensorvorrichtungen zur optischen Abstandsmessung nach dem konfokalen Abbildungsprinzip insbesondere dadurch aus, dass nicht mehr die gesamte Sensorvorrichtung relativ zu der zu erfassenden Oberfläche, sondern nur noch der auf der optischen Achse angeordnete Reflektor bewegt werden muss. Damit muss nur noch eine im Vergleich zur gesamten Sensorvorrichtung relativ kleine Masse bewegt werden, so dass die Bewegung mit einer hohen Frequenz erfolgen kann und somit eine hohe Datenrate gewährleistet ist.

Gemäß einer Ausführungsform der Erfindung ist der Reflektor ein Planspiegel. Die Realisierung des Reflektors durch einen Planspiegel hat den Vorteil, dass der Reflektor kostengünstig hergestellt werden kann. Ferner kann der als Planspiegel ausgebildete Reflektor sehr kleine räumliche Abmessungen und somit auch eine geringe Masse aufweisen, so dass der Reflektor mit einer sehr hohen Frequenz bewegt werden kann.

Gemäß einer anderen Ausführungsform der Erfindung wird der Reflektor periodisch bewegt. Somit kann der Abstand eines Punktes der zu vermessenden Oberfläche von Sensorvorrichtung mehrmals hintereinander gemessen und dieser Abstand durch Mittelung über mehrere Einzelmessungen besonders genau ermittelt werden.

Gemäß einer weiteren Ausführungsform der Erfindung erfolgt die Bewegung des Reflektors mittels eines elektromagnetischen, eine piezoelektrischen und/oder eines mikromechanischen kapazitiven Antriebs. Diese Antriebsformen ermöglichen eine hochfrequente Bewegung des Reflektors, so dass eine besonderes hohe Datenrate des erfindungsgemäßen Abstandssensors erzielt werden kann.

Gemäß einer bevorzugten Ausführungsform der Erfindung weist die Abbildungsoptik eine Sammellinse auf. Im einfachsten Fall besteht die Abbildungsoptik aus einer einzelnen Sammellinse. Damit kann die Abbildungsoptik auf einfache und insbesondere auf preiswerte Weise realisiert werden.

Gemäß einer anderen, besonders bevorzugten Ausführungsform der Erfindung sind lichtaussendendes Element und lichtempfangendes Element mittels eines ersten Endes eines Lichtwellenleiters realisiert. Damit ergibt sich die vorteilhafte Möglichkeit, dass die Komponenten der Sensorvorrichtung in zwei verschiedenen, räumlich getrennten Modulen eingebaut werden. Besonders vorteilhaft erweist sich, wenn Lichtquelle, Lichtdetektor und die elektronischen Komponenten der Sensorvorrichtung in einem ersten Modul und nur diejenigen Komponenten der Sensorvorrichtung in einem zweiten Modul enthalten sind, welche sich entsprechend dem konfokalen Abbildungsprinzip nahe des zu untersuchenden Objekts befinden müssen. Somit kann die Sensorvorrichtung objektseitig besonders klein aufgebaut werden.

Gemäß einer weiteren, besonders bevorzugten Ausführungsform der Erfindung ist das zweite Ende des Lichtwellenleiters in zwei Teilenden aufgespalten, wobei ein erstes Teilende mit der Lichtquelle und ein zweites Teilende mit dem Lichtdetektor optisch gekoppelt ist. Die Aufspaltung des Lichtwellenleiters in zwei Teilenden erfolgt erfindungsgemäß bevorzugt mittels eines Lichtwellenleiterkopplungsglieds. Diese weitere, besonders bevorzugte Ausführungsform hat den Vorteil, dass auf eine Justierung der Lichtquelle und des Lichtdetektors relativ zu dem zweiten Ende des Lichtwellenleiters verzichtet werden kann.

Weitere Vorteile und Merkmale der vorliegenden Erfindung ergeben sich aus der nachfolgenden beispielhaften Beschreibung von derzeit bevorzugten Ausführungsformen.
- Figur 1 zeigt: eine optische Sensorvorrichtung nach dem kon- fokalen Abbildungsprinzip gemäß dem Stand der Technik.
- Figur 2 zeigt: eine ein erstes und ein zweites Modul aufwei- sende optische Sensorvorrichtung nach dem kon- fokalen Abbildungsprinzip gemäß einem ersten Ausführungsbeispiel der Erfindung. Im zweiten Modul ist ein Ende des Lichtwellenleiters in zwei Teilenden aufgespalten, wobei ein erstes Teilende mit der Lichtquelle und ein zweites Teilende mit dem Lichtdetektor optisch gekop- pelt ist.
- Figur 3 zeigt: ein zweites Modul einer optischen Sensorvor- richtung gemäß einem zweiten Ausführungsbei- spiel der Erfindung. Lichtquelle und Lichtde- tektor sind mittels einer einen Strahlteiler mit dem erfindungsgemäßen Lichtwellenleiter gekoppelt.
- Figur 4 zeigt: ein erstes Modul einer optischen Sensorvor- richtung nach dem konfokalen Abbildungsprinzip gemäß einem dritten Ausführungsbeispiel der Erfindung. Auf der optischen Achse ist zusätz- lich ein Umlenkspiegel angeordnet.

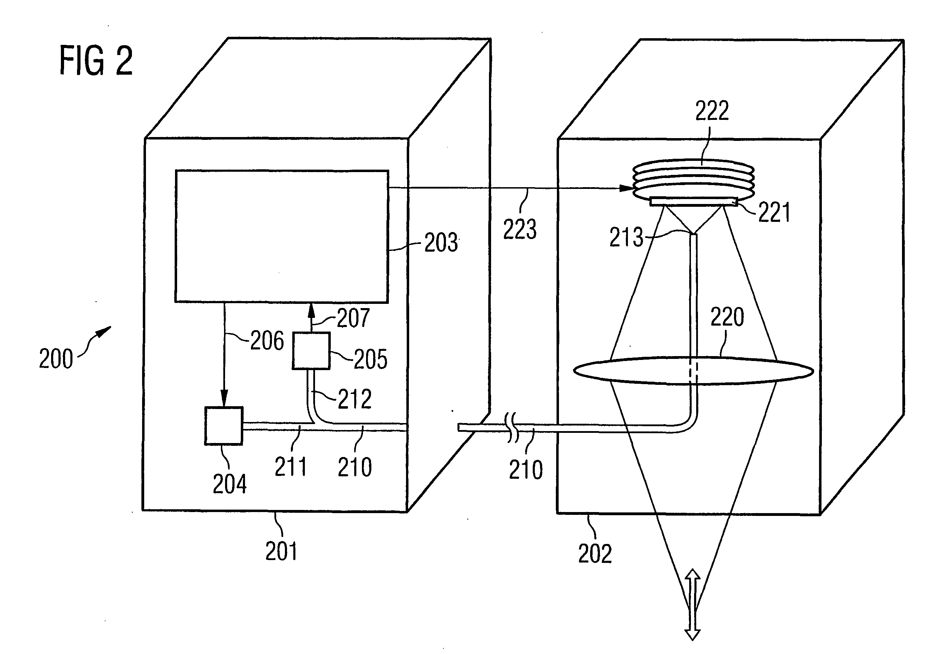

Figur 2 zeigt eine optische Sensorvorrichtung 200 nach dem konfokalen Abbildungsprinzip gemäß einem ersten Ausführungsbeispiel der Erfindung. Die Sensorvorrichtung 200 weist ein erstes Modul 201 und ein zweites Modul 202 auf. Das erste Modul 201 enthält ein Elektronikmodul 203, einen als Lichtquelle dienenden Laser 204 und eine als Lichtdetektor dienende Photodiode 205. Der Laser 204 ist mittels einer elektrischen Verbindungsleitung 206 mit dem Elektronikmodul 203 gekoppelt. Die Photodiode 205 ist mittels der elektrischen Verbindungsleitung 207 mit dem Elektronikmodul gekoppelt. Das erste Modul 201 ist mittels eines Lichtwellenleiters 210 mit dem zweiten Modul 201 optisch gekoppelt. Der Lichtwellenleiter 210 ist auf der dem ersten Modul 201 zugewandten Seite in ein erstes Teilende 211 und ein zweites Teilende 212 aufgespalten. Das erste Teilende 211 ist mit dem Laser 204 optisch gekoppelt. Das zweite Teilende 212 ist mit der Photodiode 205 optisch gekoppelt. Ein innerhalb des zweiten Moduls 202 angeordnetes Lichtwellenleiterende 213 des Lichtwellenleiters 210 dient sowohl als punktförmige Lichtquelle als auch als punktförmige Empfängerfläche.

Im folgenden werden die Komponenten des zweiten Moduls 202 beschrieben. Das zweite Modul 202 weist eine Sammellinse 220 und einen beweglichen Reflektor 221 auf. Der bewegliche Reflektor 221 ist senkrecht zu der optischen Achse der Sammellinse 220 angeordnet. Der Reflektor 221 ist gemäß dem hier beschriebenen ersten Ausführungsbeispiel der Erfindung ein Planspiegel. Dieser wird mittels eines Antriebs 222 in axialer Richtung entlang der optischen Achse der Sammellinse 220 bewegt. Der Antrieb 222 ist ein elektromagnetischer Antrieb, ein piezoelektrischer Antrieb oder ein mikromechanisch kapazitiver Antrieb. Der Antrieb 222 ist ferner über die Steuerleitung 223 mit dem Elektronikmodul 203 gekoppelt. Zwischen dem Reflektor 221 und der Sammellinse 220 ist auf der optischen Achse der Sammellinse 220 das Lichtwellenleiterende 213 derart angeordnet, dass das von dem Laser 204 in das erste Teilende 211 des Lichtwellenleiters 210 in den Lichtwellenleiter 210 eingekoppelte Licht an dem Lichtwellenleiterende 213 aus dem Lichtwellenleiter 210 austritt und auf den Reflektor 221 trifft. Das Lichtwellenleiterende 213 stellt dabei annähernd eine Punktlichtquelle dar. Das von dem Lichtwellenleiterende 213 ausgesendete Licht wird von dem Reflektor 221 reflektiert und danach von der Sammellinse 220 fokussiert. Das fokussierte Licht trifft auf die zu vermessende Oberfläche (nicht dargestellt) und wird von dieser Oberfläche zumindest teilweise reflektiert. Das reflektierte Licht wird wiederum von der Sammellinse 220 abgebildet und trifft auf den Reflektor 221, welcher das zurückgestreute Licht auf das Lichtwellenleiterende 213 richtet. An diesem wird das zurückreflektierte Licht in den Lichtwellenleiter 210 zumindest teilweise eingekoppelt und das eingekoppelte Licht wird wiederum zumindest teilweise über das zweite Teilende 212 des Lichtwellenleiters 210 von der Photodiode 205 erfasst. Das Lichtwellenleiterende 213 dient gemäß der Erfindung als Punktdetektor.

Wird nun der Reflektor 221 mittels des Antriebs 222 in axialer Richtung bewegt, so findet im Objektbereich, d.h. auf der dem Reflektor abgewandten Seite der Sammellinse 220, eine Verschiebung des Fokus statt. Genau dann, wenn der Fokus mit einem minimalen Querschnitt auf die zu untersuchende Oberfläche trifft, detektiert die Photodiode 205 ein maximale Lichtintensität und liefert ein maximales Ausgangssignal. Durch die Messung der von der Photodiode 205 detektierten Lichtintensität als Funktion der Position des Reflektors 221 kann entsprechend dem konfokalen Detektorprinzip der Abstand des Objekts von der Sammellinse 220 bzw. von dem gesamten zweiten Modul 202 gemessen werden.

Da gemäß dem hier beschriebenen ersten Ausführungsbeispiel der Erfindung nur wenige optische Komponenten innerhalb des zweiten Moduls 202 benötigt werden, kann das zweite Modul 202 in einer sehr kompakten Bauform räumlich getrennt von dem ersten Modul 210 realisiert werden. Gemäß dem hier beschriebenen ersten Ausführungsbeispiel der Erfindung weist das Modul 202 eine Höhe von ungefähr 6 cm, eine Breite von ungefähr 5 cm und eine Tiefe von ebenfalls ungefähr 5 cm auf. Die hier beschriebene Sensorvorrichtung 200 gemäß der ersten Ausführungsform der Erfindung weist einen Höhenmessbereich von ungefähr 2 mm auf. Dies bedeutet, dass dreidimensionale Objekte mit einem Höhenunterschied von bis zu 2 mm vermessen werden können. Die Höhenauflösung der hier beschriebenen Sensorvorrichtung 200 beträgt ungefähr 2 µm. Da der Reflektor 221 in Form eines kleinen, leichten Planspiegels realisiert werden kann, muss erfindungsgemäß nur eine sehr kleine Masse entlang der optischen Achse der Sammellinse 220 bewegt werden. Die Bewegung des Reflektors 221 kann auf vorteilhafte Weise mittels eines elektromagnetisch angetriebenen Oszillators erfolgen. Ein derartiger Oszillator, der die Funktionalität einer Stimmgabel aufweist, ist bereits in DE 196 08 468 C2 beschrieben. Alternativ kann der Reflektor 221 auch mittels eines Tauchspulenantriebs, welcher in handelsüblichen Lautsprechern zum Einsatz kommt, bewegt werden. Der Antrieb 222 kann jedoch auf besonders vorteilhafte Weise mittels einer mikromechanischen Lösung realisiert werden. Dabei wird der Oszillator mittels Silizium-Ätztechnik hergestellt. Der Reflektor 221 kann dann als fester Bestandteil des Oszillatorsystems ausgebildet werden. Diese Lösung, welche in der hier beschriebenen ersten Ausführungsform der Erfindung zum Einsatz kommt, erlaubt eine Oszillationsfrequenz von bis zu 10 kHz. Da pro Halbperiode der Bewegung des Reflektors 221 eine Abstandsmessung erfolgen kann, sind mit der hier beschriebenen Sensorvorrichtung 200 gemäß dem ersten Ausführungsbeispiel der Erfindung bis zu 20000 Abstandsmessungen pro Sekunde möglich.

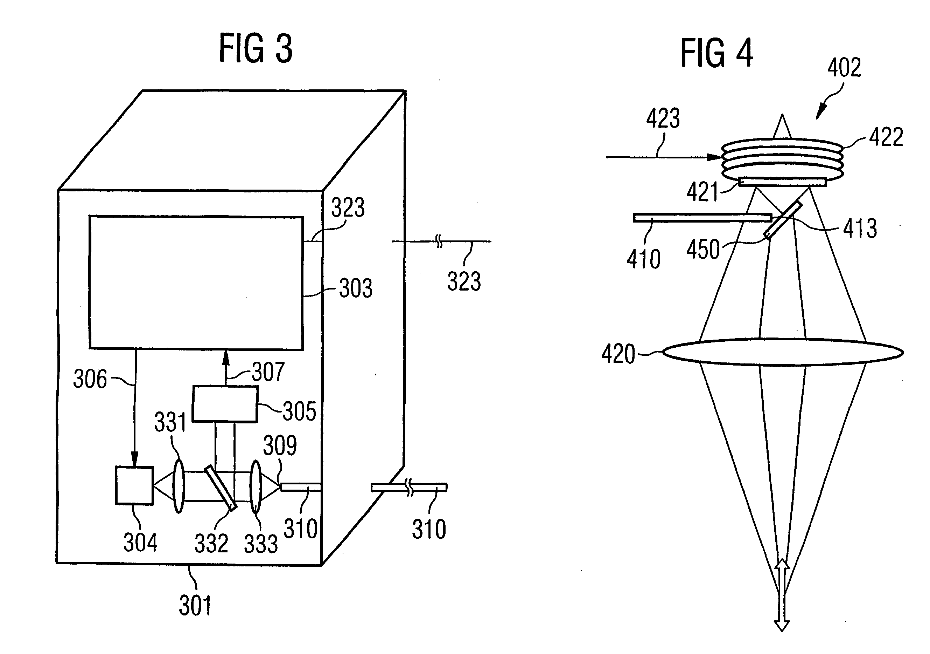

Im folgenden wird anhand von Figur 3 ein erstes Modul 301 gemäß einem zweiten Ausführungsbeispiel der Erfindung erläutert. Das erste Modul 301 weist ein Elektronikmodul 303, eine als Lichtquelle dienende Leuchtdiode 304 und eine als Lichtdetektor dienende Photodiode 305 auf. Die Leuchtdiode 304 ist über eine elektrische Verbindungsleitung 306 mit dem Elektronikmodul 303 gekoppelt. Die Photodiode 305 ist über eine elektrische Verbindungsleitung 307 mit dem Elektronikmodul 303 gekoppelt. Die Leuchtdiode 304 und die Photodiode 305 sind beide über eine Fasereinkoppelvorrichtung mit dem Lichtwellenleiter 310 optisch gekoppelt. Der Lichtwellenleiter 310 mündet in ein nicht dargestelltes zweites Modul, welches entsprechend dem zweiten Modul gemäß dem ersten Ausführungsbeispiel der Erfindung (siehe Figur 2) aufgebaut ist. Analog dem ersten Ausführungsbeispiel ist das Elektronikmodul 303 über eine Steuerleitung 323 mit dem Antrieb des nicht dargestellten zweiten Moduls gekoppelt. Die Fasereinkoppelvorrichtung weist eine erste Sammellinse 331, einen Strahlteiler 332 und eine zweite Sammellinse 333 auf. Dabei ist die erste Sammellinse 331, der Strahlteiler 332 und die zweite Sammellinse 333 derart angeordnet, dass das von der Leuchtdiode 304 ausgesandte Licht auf das Lichtwellenleiterende 309 fokussiert und somit in den Lichtwellenleiter 310 eingespeist wird. Andererseits ist die zweite Sammellinse 333 und der Strahlteiler 332 derart angeordnet, dass das von dem Lichtwellenleiterende 309 ausgesandte Licht von der Photodiode 305 erfasst wird.

In einer Variante des ersten Moduls des zweiten Ausführungsbeispiels wird als Lichtquelle eine Laserdiode verwendet. Das Licht der Laserdiode wird kollimiert, durchläuft einen Strahlteiler und wird mittels einer Fokussieroptik in eine Faser eingekoppelt. Das detektionsseitige auf die Faser auftreffende Licht wird durch den Strahlteiler abgelenkt und mittels einer weiteren Optik auf einen Lichtdetektor fokussiert.

Im folgenden wird anhand von Figur 4 ein zweites Modul 402 gemäß einem dritten Ausführungsbeispiel der Erfindung erläutert. Das zweite Modul 402 weist einen Umlenkreflektor 450, einen Reflektor 421, einen Antrieb 422 und eine Sammellinse 420 auf. Der Reflektor 421, welcher mittels des Antriebs 422 entlang der optischen Achse der Sammellinse 420 bewegt werden kann, ist senkrecht zu der optischen Achse der Sammellinse 420 angeordnet. Der Umlenkreflektor 450, welcher sich ebenfalls auf der optischen Achse der Sammellinse 420 befindet, ist winklig zu dieser Achse zwischen dem Reflektor 421 und der Sammellinse 420 angeordnet. Der Antrieb 422 ist mittels einer Steuerleitung 423 mit einem Elektronikmodul (nicht dargestellt) elektrisch gekoppelt. Das zweite Modul 402 ist mittels eines Lichtwellenleiters mit einem nicht dargestellten ersten Modul optisch gekoppelt. Ein zugehöriges nicht dargestellte erstes Modul ist gemäß der dritten Ausführungsform der Erfindung wie das in Figur 2 dargestellte erste Modul 201 oder wie das in Figur 3 dargestellte erste Modul 301 ausgebildet. Der Lichtwellenleiter 410 und der Umlenkreflektor 450 sind relativ zu der optischen Achse der Sammellinse 420 derart angeordnet, dass das von einem Lichtwellenleiterende 413 ausgesandte Licht auf den Umlenkreflektor 450 trifft und von diesem derart reflektiert wird, dass das von dem Umlenkreflektor 450 reflektierte Licht in Form eines zu der optischen Achse der Sammellinse 420 koaxialen Kegels auf den beweglichen Reflektor 421 trifft. Das von dem beweglichen Reflektor 421 reflektiert Licht wird dann von der Sammellinse 420 auf die Oberfläche des zu untersuchenden Objektes abgebildet. Von der Oberfläche des zu untersuchenden Objektes wird zumindest ein Teil des auf die Oberfläche auftreffenden Lichtes koaxial zurückgestreut, welches dann von der Sammellinse 420 mittels einer ersten Reflexion an dem bewegten Reflektor 421 und einer zweiten Reflexion an dem Umlenkreflektor 450 auf das Lichtwellenleiterende 413 abgebildet und somit in den Lichtwellenleiter 410 eingespeist wird. Wie bereits anhand der Beschreibung von Figur 2 erläutert, findet im Objektbereich eine Fokus-Verschiebung entlang der optischen Achse der Sammellinse 420 statt, wenn der von dem Antrieb 422 bewegte Reflektor 421 in axialer Richtung parallel zur optischen Achse der Sammellinse 420 bewegt wird. Die von der zu untersuchenden Oberfläche zurückgestreute Lichtintensität und somit auch die Lichtintensität, welche in den Lichtwellenleiter 410 eingekoppelt wird, wird genau dann maximal, wenn der entlang der optischen Achse der Sammellinse 420 verschobene Fokus auf die zu untersuchende Oberfläche trifft.

Der Abstand der zu untersuchenden Oberfläche von dem zweiten Modul 402 wird dann dadurch ermittelt, dass die von der Oberfläche zumindest teilweise zurückgestreute, in den Lichtwellenleiter 410 eingespeiste und von dem mit dem Lichtwellenleiter 410 optisch gekoppelten Lichtdetektor (nicht dargestellt) gemessene Lichtintensität als Funktion der Auslenkung des bewegten Reflektors 421 gemessen wird.

An dieser Stelle sei darauf hingewiesen, dass der Umlenkreflektor 450 zu einer Abschattung der Lichtintensität nahe der optischen Achse der Sammellinse 420 führt. Aufgrund des zylindersymmetrischen Strahlengangs innerhalb des zweiten Moduls 402 zwischen dem Umlenkreflektor 450 und der zu vermessenden Oberfläche trägt der von dem schrägstehenden Umlenkreflektor 450 abgeschattete Bereich nur wenig zur gesamten Lichtintensität bei. Darüber hinaus enthalten die Randstrahlen den größten Teil der Abstandsinformation. Somit kann die durch die Abschattung durch den Umlenkreflektor 450 verursachte Reduzierung der Lichtintensität in guter Näherung vernachlässigt werden.

Der Umlenkreflektor 450 ist insbesondere dann von Vorteil, wenn das zweite Modul 402 innerhalb einer sehr kompakten Baugröße realisiert werden soll und demzufolge kleine Biegeradien des Lichtwellenleiters 410 vermieden werden sollen.

## Patentansprüche

1. Sensorvorrichtung zur schnellen optischen Abstandsmessung nach dem konfokalen Abbildungsprinzip zur Ermittlung von Abstands- und/oder Höhenwerten einer Oberfläche, insbesondere zur dreidimensionalen Oberflächenvermessung, mit
• einem auf einer optischen Achse angeordneten punktförmigen lichtaussendenden Element (204),
• einem senkrecht zu der optischen Achse angeordneten Reflektor (221), welcher entlang der optischen Achse bewegbar ist,
• einer zentriert zu der optischen Achse angeordneten Abbildungsoptik (220) und
• einem punktförmigen lichtempfangenden Element (205), welches an der selben Stelle wie das lichtaussendende Element angeordnet ist,
wobei
• von dem lichtaussendenden Element ausgesandtes Licht von dem Reflektor reflektiert wird,
• im Verlauf der Bewegung des Reflektors das von dem Reflektor reflektierte Licht von der Abbildungsoptik zumindest einmal auf die zu vermessende Oberfläche fokussiert wird,
• das fokussierte Licht von der zu vermessenden Oberfläche zumindest teilweise zurückgestreut wird und
• im Verlauf der Bewegung des Reflektors das zurückgestreute Licht von der Abbildungsoptik über den Reflektor zumindest einmal auf das lichtempfangende Element fokussiert wird.

2. Sensorvorrichtung gemäß Anspruch 1, bei der der Reflektor ein Planspiegel ist.

3. Sensorvorrichtung gemäß einem der Ansprüche 1 oder 2, bei der der Reflektor periodisch bewegt wird.

4. Sensorvorrichtung gemäß einem der Ansprüche 1 bis 3, bei der der Reflektor mittels eines elektromagnetischen, eines piezoelektrischen und/oder eines mikromechanischen kapazitiven Antriebs bewegt wird.

5. Sensorvorrichtung gemäß einem der Ansprüche 1 bis 4, bei der die Abbildungsoptik eine Sammellinse aufweist.

6. Sensorvorrichtung gemäß einem der Ansprüche 1 bis 5, wobei die Wellenlänge des Lichts im infraroten, im sichtbaren oder im ultravioletten Spektralbereich liegt.

7. Sensorvorrichtung gemäß einem der Ansprüche 1 bis 6, bei der das lichtaussendende Element und das lichtempfangende Element mittels eines ersten Endes eines Lichtwellenleiters (210) realisiert sind.

8. Sensorvorrichtung gemäß einem der Ansprüche 1 bis 6, bei der das von dem lichtaussendenden Element ausgesandte Licht und das von dem lichtempfangenden Element empfangene Licht zusätzlich über einen auf der optischen Achse angeordneten Umlenkreflektor (450) gelenkt wird.

9. Sensorvorrichtung gemäß Anspruch 8, bei der der Umlenkreflektor ein Planspiegel ist.

10. Sensorvorrichtung gemäß Anspruch 8 oder 9, bei der der Umlenkreflektor in einem festen Winkel von 45° zu der optischen Achse orientiert ist.

11. Sensorvorrichtung gemäß einem der Ansprüche 7 bis 10, bei der ein zweites Ende des Lichtwellenleiters sowohl mit einer Lichtquelle als auch mit einem Lichtdetektor optisch gekoppelt ist.

12. Sensorvorrichtung gemäß Anspruch 11, bei der das zweite Ende des Lichtwellenleiters in zwei Teilenden aufgespalten ist, wobei ein erstes Teilende mit der Lichtquelle und ein zweites Teilende mit dem Lichtdetektor optisch gekoppelt ist.

13. Sensorvorrichtung gemäß Anspruch 11, bei der Lichtquelle und Lichtdetektor mittels einer einen Strahlteiler aufweisenden Fasereinkoppelvorrichtung mit dem zweiten Ende des Lichtwellenleiters optisch gekoppelt sind.

14. Sensorvorrichtung gemäß einem der Ansprüche 11 bis 13, bei der die Lichtquelle ein Laser oder eine Leuchtdiode ist.

15. Sensorvorrichtung gemäß einem der Ansprüche 11 bis 14, bei der der Lichtdetektor ein Sekundärelektronenvervielfacher, eine Photodiode, eine Avalache-Photodiode oder ein Multi Channel Plate-Detektor ist.

## Claims

1. Sensor device for quick optical distance measurement based on the principle of confocal imaging to obtain the Ab-5 position or height of a surface, especially for three-dimensional surface measurement with
• one point-shaped light-transmitting element (204) placed on an optical axis,
• one reflector (221) placed vertically on the optical axis, such that it can be moved along the optical axis,
• one imaging lens (220) centred with respect to the optical axis, and
• one point-shaped light-receiving element (205), which is placed at the same position as the light-transmitting element,
whereby
• the light transmitted by the light-transmitting element is reflected by the reflector,
• in the process of moving the reflector, the light reflected by the reflector is focused at least once by the imaging lens on the surface for which measurements are being made,
• the light focused on the surface for which measurements are being made is at least partially re-dispersed by it, and
• in the course of moving the reflector, the re-dispersed light from the imaging lens is focused at least once via the reflector on the element receiving the light.

2. The sensor device in accordance with claim 1, in which the reflector is a plane mirror.

3. The sensor device in accordance with one of the claims 1 or 2, in which the reflector is moved periodically.

4. Sensor device, in accordance with one of the claims 1 to 3, in which the reflector is moved with the help of an electromagnetic, a piezo-electric and/or a micro-mechanical capacitive drive.

5. Sensor device in accordance with one of the claims 1 to 4, in which the imaging lens is a collective lens.

6. Sensor device, in accordance with one of the claims 1 to 5, whereby the wavelength of the light lies in the infrared visible or in the ultraviolet spectral range.

7. Sensor device, in accordance with one of the claims 1 to 6 in which the light-transmitting element and the light-receiving element have been realised using one end of an optical fibre (210).

8. Sensor device in accordance with one of the claims 1 to 6, in which the light transmitted by the light-transmitting element and that received by the light-receiving element is additionally deflected via a deflective reflector (450) placed on the optical axis.

9. Sensor device, in accordance with claim 8, in which the deflecting reflector is a plane mirror.

10. Sensor device, in accordance with the claims 8 or 9, in which the deflecting reflector is aligned to a fixed angle of 45° to the optical axis.

11. Sensor device in accordance with one of the claims 7 to 10, in which the second end of the optical fibre cable is coupled optically to both an optical light source and a light detector.

12. Sensor device in accordance with claim 11, in which the second end of the optical fibre cable is split into two partial ends, whereby the end of the first part is coupled to the optical light source and the end of the second part is coupled to the optical light detector.

13. Sensor device, in accordance with claim 11, in which the optical light source and the optical detector are optically coupled with the second end of the optical fibre cable with the help of a fibre coupling device having a beam splitter.

14. Sensor device, in accordance with one of the claims 11 to 13 in which the optical light source is either a laser or an LED (Light Emitting Diode).

15. Sensor device, in accordance with one of the claims 11 to 14, in which the optical detector is either a secondary electron beam multiplier/a photo diode, an avalanche photo diode or a multi-channel plate detector.

## Revendications

1. Dispositif de détection pour la mesure optique rapide de distances selon le principe d'imagerie confocale afin de déterminer des valeurs de distance et/ou de hauteur d'une surface, en particulier pour la mesure tridimensionnelle de surfaces, comportant
· un élément émetteur de lumière ponctuel (204) agencé sur un axe optique,
· un réflecteur (221) agencé perpendiculairement à l'axe optique et mobile le long de l'axe optique,
· un composant optique d'imagerie (220) agencé centré par rapport à l'axe optique et
· un élément récepteur de lumière ponctuel (205), ledit élément étant agencé au même emplacement que l'élément émetteur de lumière,
dans lequel
· une lumière émise par l'élément émetteur de lumière est réfléchie par le réflecteur,
· au cours du déplacement du réflecteur, la lumière réfléchie par le réflecteur est focalisée par le composant optique d'imagerie au moins une fois sur la surface à mesurer,
· la lumière focalisée est rétrodiffusée au moins partiellement par la surface à mesurer et
· au cours du déplacement du réflecteur, la lumière rétrodiffusée par le composant optique d'imagerie est focalisée par l'intermédiaire du réflecteur au moins une fois sur l'élément récepteur de lumière.

2. Dispositif de détection selon la revendication 1, dans lequel le réflecteur est un miroir plan.

3. Dispositif de détection selon l'une quelconque des revendications 1 ou 2, dans lequel le réflecteur est déplacé de manière périodique.

4. Dispositif de détection selon l'une quelconque des revendications 1 à 3, dans lequel le réflecteur est déplacé au moyen d'un mécanisme d'entraînement capacitif électromagnétique, piézoélectrique et/ou micro-mécanique.

5. Dispositif de détection selon l'une quelconque des revendications 1 à 4, dans lequel le composant optique d'imagerie comporte une lentille convergente.

6. Dispositif de détection selon l'une quelconque des revendications 1 à 5, dans lequel la longueur d'onde de la lumière est dans le domaine spectral infrarouge, visible ou ultraviolet.

7. Dispositif de détection selon l'une quelconque des revendications 1 à 6, dans lequel l'élément émetteur de lumière et l'élément récepteur de lumière sont mis en oeuvre au moyen d'une première extrémité d'un guide d'onde optique (210).

8. Dispositif de détection selon l'une quelconque des revendications 1 à 6, dans lequel la lumière émise par l'élément émetteur de lumière et la lumière reçue par l'élément récepteur de lumière est de plus dirigée par l'intermédiaire d'un réflecteur de déviation (450) agencé sur l'axe optique.

9. Dispositif de détection selon la revendication 8, dans lequel le réflecteur de déviation est un miroir plan.

10. Dispositif de détection selon la revendication 8 ou 9, dans lequel le réflecteur de déviation est orienté à un angle fixe de 45 ° par rapport à l'axe optique.

11. Dispositif de détection selon l'une quelconque des revendications 7 à 10, dans lequel une seconde extrémité du guide d'onde optique est optiquement couplée à la fois à une source de lumière et à un détecteur de lumière.

12. Dispositif de détection selon la revendication 11, dans lequel la seconde extrémité du guide d'onde optique est divisée en deux extrémités partielles, dans lequel une première extrémité partielle est optiquement couplée à la source de lumière et une seconde extrémité partielle est optiquement couplée au détecteur de lumière.

13. Dispositif de détection selon la revendication 11, dans lequel la source de lumière et le détecteur de lumière sont optiquement couplés à la seconde extrémité du guide d'onde optique au moyen d'un dispositif de couplage de fibres comportant un séparateur de faisceau.

14. Dispositif de détection selon l'une quelconque des revendications 11 à 13, dans lequel la source de lumière est un laser ou une diode lumineuse.

15. Dispositif de détection selon l'une quelconque des revendications 11 à 14, dans lequel le détecteur de lumière est un multiplicateur d'électrons secondaires, une photodiode, une photodiode à avalanche ou un détecteur à plaque multicanal.
